# EUROPÄISCHE PATENTANMELDUNG

(11) **EP 4 538 510 A1**
(43) Veröffentlichungstag der Anmeldung: **16.04.2025**
(21) Anmeldenummer: 24193518.8
(22) Anmeldetag: 08.08.2024
(51) Int. Cl.: F01N 11/00

(54) **VERFAHREN ZUR BEEINFLUSSUNG EINES ALTERUNGSPROZESSES EINER KOMPONENTE EINER ABGASNACHBEHANDLUNG FÜR EIN FAHRZEUG, COMPUTERPROGRAMM, STEUERGERÄT, ANTRIEBSMASCHINE UND KRAFTFAHRZEUG**

(30) Priorität: 29.09.2023 DE 102023209630
(71) Anmelder: Volkswagen Aktiengesellschaft, 38440 Wolfsburg (DE)
(72) Erfinder: Bippes, Michael, 38112 Braunschweig (DE)

(57) **Zusammenfassung**

Die vorliegende Erfindung betrifft ein Verfahren zur Beeinflussung eines Alterungsprozesses einer Komponente (1) einer Abgasnachbehandlung für ein Fahrzeug (200), umfassend:
- Prädiktive Bestimmung eines Alterungszustands (20) an der Komponente (1) mit einem Alterungsmodell (21);
- Ermitteln eines charakteristischen Werts (23) aus Betriebsparametern aus bisherigen Momentanforderungen;
- Ermitteln eines zulässigen Moments (25) unter Berücksichtigung des Alterungszustands (20) an der Komponente (1) und des charakteristischen Werts (23), bei dem ein Grenzwert (27) einer konformen Alterungsbedingung der Komponente (1) unterschritten wird;
- Vergleich einer aktuellen Momentanforderung (29) mit dem zulässigen Moment (25);
- Ausgabe eines Signals (30), wenn die aktuelle Momentanforderung (29) das zulässige Moment (25) überschreitet; und
- Auslösen eines Steuerbefehls (31) einer Motorsteuerung (160), wobei der Steuerbefehl (31) in Abweichung der Überschreitung der aktuellen Momentanforderung (29) zu dem zulässigen Moment (25) ausgewählt wird.

Die Erfindung betrifft weiterhin ein Computerprogramm (150), umfassend Befehle, die bei der Ausführung des Programms durch einen Computer diesen veranlassen, das erfindungsgemäße Verfahren auszuführen, ein Steuergerät (160) das eingerichtet ist, das erfindungsgemäße Verfahren auszuführen, eine Antriebsmaschine (100) mit dem erfindungsgemäßen Steuergerät (160) sowie ein Kraftfahrzeug (200) mit der erfindungsgemäßen Antriebsmaschine (100).

## Beschreibung

Die Erfindung betrifft ein Verfahren zur Beeinflussung eines Alterungsprozesses einer Komponente einer Abgasnachbehandlung für ein Fahrzeug, sowie ein Computerprogramm, ein Steuergerät, eine Antriebsmaschine und ein Kraftfahrzeug.

Zur Einhaltung immer strenger werdender Abgasgesetzgebungen werden zur Reduktion der Schadstoffe verschiedene Komponenten zur Abgasnachbehandlung (AGN) eingesetzt. Dadurch können die aus dem Brennraum der Verbrennungskraftmaschine kommenden Verbrennungsgase gereinigt werden. Die Reinigung kann auf mechanischen, katalytischen oder chemischen Wege erfolgen.

Die Effektivität der Reinigung der Abgase hängt jedoch maßgeblich vom Zustand und der Leistungsfähigkeit der Komponente ab. Das individuelle Fahrverhalten hat dabei einen wesentlichen Einfluss auf die Alterung der Komponenten der AGN.

Neue gesetzliche Regularien sollen zukünftig sicherstellen, dass sich der Schadstoffausstoß von Fahrzeugen innerhalb einer vordefinierten relevanten Nutzungsdauer in einem konformen Bereich befindet und dieser in keinem Fall überschritten wird. Es ist daher im Sinne des Herstellers, dass die Komponenten zur Abgasnachbehandlung über die gesamte relevante Nutzungsdauer im konformen Bereich arbeiten und nicht zu schnell altert. Dazu ist es notwendig, dass die Komponenten durch das individuelle Fahrverhalten des Fahrers möglichst wenig negativ beeinflusst werden.

In der Praxis treten Fahrzustände, bei denen die Komponente der AGN außerhalb des konformen Bereichs arbeitet, häufig bei Fahrzeugen auf, die über eine hohe Volumenleistung oder eine geringe Leistung verfügen. Insbesondere bei einer geringen Leistung wird vermehrt ein zu hohes bzw. annähernd maximales Moment von dem Fahrer angefordert, um beispielsweise bei einem Überholvorgang ausreichend beschleunigen zu können. Dadurch werden die Komponenten überbelastet und die Alterung schreitet schneller voran. Das hat letztlich einen direkten negativen Einfluss auf die Leistungsfähigkeit der Komponenten.

In diesem Zusammenhang sind verschiedene Lösungsansätze bekannt. Beispielsweise werden überdimensionierte Katalysatoren verbaut, die Leistung von Seiten des Fahrzeugs beschränkt, Komponenten vorbeugend getauscht oder die Temperatur in der AGN erhöht bei gleichzeitigem Beibehalten des Abgasvolumenstroms.

Durch die bekannten Lösungen ergibt sich das Problem, dass der Bauraumbedarf steigt, die Zeit zum Erreichen der Light-Off-Temperatur vergrößert wird, das Gewicht steigt, die Materialkosten steigen, der Kraftstoffbedarf steigt, die Fahrleistung vermindert wird oder die Werkstattaufenthalte steigen.

Die US 2012/0226424 A1 beschreibt ein Verfahren zur Bestimmung der Abgasemissionen und Effizienz eines Fahrzeugs. Es wird ein Verfahren zur Bestimmung einer Emissionsflussrate von einem oder mehreren CO2-Äquivalentgasen aus einem Abgassystem eines Verbrennungsmotors eines Fahrzeugs bereitgestellt. Weiterhin wird ein Verfahren zur Bestimmung eines Fahrzeugeffizienzfaktors des Fahrzeugs bereitgestellt. Der Fahrzeugwirkungsgrad wird in Echtzeit mit dem entsprechenden Punkt auf einer Fahrzeugwirkungsgradkarte verglichen, die auf mindestens einem der folgenden Elemente basiert: aktuelle Fahrzeugbedingungen, Fahrbedingungen, Umgebungsbedingungen oder Energieflussvisualisierungsdaten. Daraus kann ein Fahrereffizienzfaktor abgeleitet werden. Anhand dieser Maßnahmen kann der Fahrer den ökologischen Fußabdruck seines Fahrzeugs verfolgen, die Emissionen mit Standard-Emissionsdaten vergleichen und das Fahrverhalten optimieren. Dadurch kann der Fahrer das Fahrzeug effizienter bedienen.

Die DE 10 2013 200 318 A1 beschreibt ein Verfahren zur Verbrauchsoptimierung eines Antriebsstrangs eines Fahrzeugs. Durch eine Kalibrierung des Antriebsstrangs im jeweiligen Fahrzeug kann ein Verbrauch reduziert werden und gleichzeitig die Emissionsvorschriften eingehalten werden. Die Kalibrierung basiert dabei auf während der Fahrt gewonnenen Daten. Die Daten können den Alterungsstatus von Komponenten der Abgasnachbehandlung umfassen. Dem Fahrer können Fahrhinweise zur Verbrauchsreduktion ausgegeben werden. Beispielsweise kann dem Fahrer eine erwartete Einsparung in Form von niedrigerem Kraftstoffverbrauch gegenüber dem erforderlichen Investment vorausberechnet werden, um so die Entscheidung des Fahrers zu unterstützen.

Die AT 524043 A4 2022-02-15 beschreibt ein Verfahren zum prädikativen Regeln eines Antriebssystems eines Kraftfahrzeugs. Es wird zumindest eine prädikative Information über die Fahrstrecke aus der Fahrzeuggeschwindigkeit, Verkehrslage, Topografie, Emissionsbeschränkung, Geofencing-Bedingung, Wetterverhältnis oder Sichtverhältnis bereitgestellt. Zur Erhöhung der Lebensdauer von Komponenten kann ein Modell des Fahrzeugs verwendet werden, bei der die Alterung einer Komponente des Fahrzeugs berücksichtigt wird. Dadurch können beispielsweise thermisch belastete Komponenten durch Heiz- oder Kühlmaßnahmen in einem Soll-Temperaturbereich gehalten werden.

Aufgabe der vorliegenden Erfindung ist es, ein verbessertes Verfahren zur Beeinflussung eines Alterungsprozesses einer Komponente einer AGN, ein verbessertes Computerprogramm, ein verbessertes Steuergerät, eine verbesserte Antriebsmaschine sowie ein verbessertes Kraftfahrzeug bereitzustellen, bei dem die oben genannten Nachteile wenigstens teilweise überwunden werden.

Diese Aufgabe wird durch das erfindungsgemäße Verfahren nach Anspruch 1, das erfindungsgemäße Computerprogramm nach Anspruch 11, das erfindungsgemäße Steuergerät nach Anspruch 12, die erfindungsgemäße Antriebsmaschine nach Anspruch 13 und das erfindungsgemäße Kraftfahrzeug nach Anspruch 14 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erster Aspekt der Erfindung betrifft ein Verfahren zur Beeinflussung eines Alterungsprozesses einer Komponente einer Abgasnachbehandlung (AGN) für ein Fahrzeug, umfassend:
- Prädiktive Bestimmung eines Alterungszustands an der Komponente mit einem Alterungsmodell;
- Ermitteln eines charakteristischen Werts aus Betriebsparametern aus bisherigen Momentanforderungen;
- Ermitteln eines zulässigen Moments unter Berücksichtigung des Alterungszustands an der Komponente und des charakteristischen Werts, bei dem ein Grenzwert einer konformen Alterungsbedingung der Komponente unterschritten wird;
- Vergleich einer aktuellen Momentanforderung mit dem zulässigen Moment;
- Ausgabe eines Signals, wenn die aktuelle Momentanforderung das zulässige Moment überschreitet; und
- Auslösen eines Steuerbefehls einer Motorsteuerung, wobei der Steuerbefehl in Abweichung der Überschreitung der aktuellen Momentanforderung zu dem zulässigen Moment ausgewählt wird.

Die Komponente der Abgasnachbehandlung kann ein Katalysator sein. Der Katalysator kann Verbrennungsgase des Fahrzeugs mechanisch, katalytisch oder chemisch reinigen. Die Komponente kann ein Partikelfilter sein.

Mit dem Verfahren kann der Alterungsprozess mehrerer Komponenten der Abgasnachbehandlung beeinflusst werden. Es können mehrere Komponenten zugleich beeinflusst werden. Es können mehrere Komponenten separat beeinflusst werden. Mit dem Verfahren können mehrere Komponente zugleich überwacht bzw. reguliert werden. Beispielsweise kann ein Steuerbefehl zur Beeinflussung des Alterungsprozesses einer bestimmten Komponente der mehreren Komponenten ausgelöst werden.

Der Alterungszustand der Komponente kann durch das Alterungsmodell vorhergesagt werden. Das Alterungsmodell kann die Abgastemperatur beinhalten. Das Alterungsmodell kann eine Temperatur der Komponente beinhalten. Die Abgastemperatur bzw. die Temperatur der Komponente können über Sensoren ermittelt werden. Der Alterungszustand der Komponente kann einer verbleibenden Restaktivität der Komponente entsprechen.

Der charakteristische Wert kann über die Zeit aus einem tatsächlichen Fahrverhalten gebildet werden. Der charakteristische Wert kann fortlaufend ermittelt werden. Der charakteristische Wert kann ein Fahrverhalten des Fahrers oder des Fahrzeugbesitzers berücksichtigen. Der charakteristische Wert kann seit einem Nutzungsbeginn fortlaufend ermittelt werden. Zur Ermittlung des charakteristischen Werts können aktuelle und vergangene Momentanforderungen gezählt werden. Der charakteristische Wert kann alle bisher ermittelten Momentanforderungen einbeziehen. Die Momentanforderungen können lastpunktabhängig sein.

Das zulässige Moment kann das Moment sein, bei dem ein Grenzwert des Alterungszustands eingehalten werden kann. Das zulässige Moment kann ein temporär einzuhaltendes Moment sein, damit die Komponente über eine vorgegebene Nutzungsdauer hinweg innerhalb der vorgeschriebenen Grenzwerte konform arbeiten kann. Wird das Fahrzeug unterhalb des zulässigen Moments betrieben, kann die Leistungsfähigkeit der Komponente innerhalb dieser vorgegebenen Nutzungsdauer gewährleistet werden. Die vorgegebene Nutzungsdauer kann ein gesetzlich vorgeschriebener Zeitraum sein. Die vorgegebene Nutzungsdauer kann ein Lebenszyklus der Komponente oder des Fahrzeugs sein.

Der Grenzwert der konformen Alterungsbedingung kann einen gesetzlichen Grenzwert einbeziehen. Mit dem Verfahren kann der Alterungsprozess derart beeinflusst werden, dass der Grenzwert über die gesamte Nutzungsdauer nicht überschritten wird.

Die aktuelle Momentanforderung kann ein Fahrerwunsch sein. Die aktuelle Momentanforderung kann ein Fahrerwunschmoment sein.

Es kann ein Signal ausgegeben werden, wenn sich abzeichnet, dass die Komponente unter Beibehaltung der aktuellen Momentanforderung den Grenzwert der konformen Alterungsbedingung über die vorgegebene Nutzungsdauer nicht erreichen kann.

Das Signal kann einen Steuerbefehl auslösen. Der Steuerbefehl kann dazu beitragen, dass eine zur aktuellen Momentanforderung abweichende Momentanforderung gewählt wird, damit das zulässige Moment nicht überschritten wird. Dadurch kann die Komponente geschont werden. Dadurch kann der Alterungsprozess der Komponente beeinflusst werden.

Der Steuerbefehl kann eine Handlung sein. Der Steuerbefehl kann in Abhängigkeit der Abweichung der Überschreitung gewählt werden. Der Steuerbefehl kann aus mehreren zur Verfügung stehenden Steuerbefehlen gewählt werden.

Dadurch kann der Fahrer aktiv über ein Fahrverhalten informiert werden. Dem Fahrer kann sein Einfluss auf die Leistungsfähigkeit der Komponente in Abhängigkeit seines Fahrverhaltens gespiegelt werden. Der Fahrer kann aktiv eingebunden werden und mit seinem Fahrverhalten dazu beitragen, den Alterungsprozess der Komponente zu verlangsamen. Dadurch ergibt sich die Wirkung, dass die Komponente der Abgasnachbehandlung über die komplette Nutzungsdauer hinweg grenzwertkonform arbeiten kann.

Durch das Verfahren kann eine Komponente für die Abgasnachbehandlung eingesetzt werden, die nicht überdimensioniert werden muss. Dadurch können Material, Gewicht und Bauraum eingespart werden. Durch das Verfahren kann die Komponente eine höhere Leistungsfähigkeit erreichen. Dadurch kann die Schadstoffemission während des Fahrbetriebs vermindert werden.

Es gibt Ausführungsformen, bei denen der Steuerbefehl entsprechend der Abweichung der Überschreitung unterschiedlich ausgewählt wird.

Es können verschiedene Steuerbefehle zur Verfügung stehen, die entsprechend der Abweichung der Überschreitung ausgewählt werden. Der Steuerbefehl kann je nach Dringlichkeit zur Einhaltung des Grenzwertes unterschiedlich abgestuft sein. Der Steuerbefehl kann mit gesteigerter Dringlichkeit zur Einhaltung des Grenzwertes unterschiedlich sein. Der Steuerbefehl kann bei einer geringen Abweichung zum zulässigen Moment anders gewählt werden als bei einer größeren Abweichung zum zulässigen Moment. Der Steuerbefehl kann in Abhängigkeit des aktuellen Alterungszustands der Komponente unterschiedlich gewählt werden. Der Steuerbefehl kann in Abhängigkeit des fortschreitenden Alterungszustands der Komponente unterschiedlich gewählt werden. Der Steuerbefehl kann eine Informationsdarstellung für den Fahrer sein. Der Steuerbefehl kann ein Eingriff in die Motorsteuerung sein. Der Steuerbefehl kann ein Speichern von Daten bzw. Informationen sein. Der Steuerbefehl kann eine Kombination daraus sein.

Die Daten können innerhalb des Fahrzeugs gespeichert werden. Die Daten können an einem anderen Ort gespeichert werden. Der andere Ort kann eine Leitstelle oder Sammelstelle sein. Der andere Ort kann ein System eines Fahrzeugherstellers, eine Werkstatt oder eine staatliche Einrichtung sein.

In einem Fall, in dem das Fahrzeug ein Hybridfahrzeug ist, kann der Steuerbefehl eine Lastverteilung zwischen einem Verbrennungsantrieb und einem elektrischen Antrieb regulieren. Der Steuerbefehl kann beispielsweise einen bestimmten Batterieladezustand (SoC) vorgeben. Infolge des Steuerbefehls kann der elektrische Antrieb aktiviert werden, damit der Alterungsprozess der Komponente reduziert wird. Das Umschalten auf den elektrischen Antrieb kann beispielsweise innerhalb eines Abschnitts erfolgen, in dem die Komponente der AGN besonders hoch belastet wird.

Der Steuerbefehl kann entsprechend einer tatsächlichen Notwendigkeit bzw. Dringlichkeit zur Einhaltung der Grenzwerte ausgewählt und ausgelöst werden. Dadurch kann die der Alterungsprozess derart beeinflusst werden, dass die Leistungsfähigkeit der Komponente innerhalb der vorgegebenen Nutzungsdauer gewährleistet ist.

Es gibt Ausführungsformen, bei denen der Steuerbefehl eine Handlungsempfehlung zum Einhalten des zulässigen Moments ist.

Die Handlungsempfehlung kann keine Handlung sein. Die Handlungsempfehlung kann eine Empfehlung sein. Die Handlungsempfehlung kann eine Mitteilung an den Fahrer sein. Die Handlungsempfehlung kann über eine fahrzeugseitige Einrichtung erfolgen. Die fahrzeugseitige Einrichtung kann ein Display, ein Lautsprecher und/oder eine Warnlampe sein. Die Mitteilung kann auch telemetrisch an den Fahrer über ein vorbestimmtes drahtloses Übertragungssystem auf eine Rechnereinheit erfolgen. Die Rechnereinheit kann beispielsweise ein Mobiltelefon, ein Smartphone, ein Tablet, eine Smartwatch oder ein AR Wearable sein.

Die Handlungsempfehlung kann ein Eintrag in einen Fehlerspeicher sein. Die Handlungsempfehlung kann eine Empfehlung der Momentanforderung an den Fahrer sein. Die Handlungsempfehlung kann eine Empfehlung für eine andere Fahrtroute sein. Die Handlungsempfehlung kann eine Empfehlung für eine andere Fahrzeit sein. Die Handlungsempfehlung kann eine Empfehlung zur Verwendung eines anderen Kraftstoffs sein. Die Handlungsempfehlung kann die Nachfrage nach einer fahrzeugseitigen Unterstützung bei der Umsetzung eine Handlung zur Erhaltung der Leistungsfähigkeit der Komponente der Abgasnachbehandlung sein. Die Handlungsempfehlung kann ein Hinweis auf einen künftig erhöhten Verbrauch an Kraftstoff und anderen Betriebsmitteln, insbesondere Reduktionsmittel und/oder Motoröl sein. Die Handlungsempfehlung kann ein Hinweis auf die Erhöhung der CO2- und/oder Schadstoffemissionen aus dem Fahrverhalten und/oder aus einem Austausch von Komponenten einer Abgas(teil)anlage sein.

Die Handlungsempfehlung kann eine Frage an den Fahrer sein, ob er weiterhin mit Hinweisen unterstützt werden will. Falls ja, können Frequenz und Hinweisart festgelegt werden. Falls nein, kann weiterhin nach einem Ruhezeitraum erneut eine solche Abfrage erfolgen.

Die Handlungsempfehlung kann beinhalten, ob das Fahrzeug den Fahrer durch dynamische und/oder statische Anpassung, insbesondere Herabsetzung, der aktuellen Momentanforderung in der Erreichung der für die Komponente zur Verhinderung der Alterung günstigen Fahrzustände unterstützen soll. Dabei kann die Handlungsempfehlung beinhalten, dass dem Fahrer nur innerhalb eines bestimmten Zeitrahmens oder eines bestimmten Leistungsbereichs diese Unterstützung angeboten wird.

Die Handlungsempfehlung kann beinhalten, dass dem Fahrer nach Fahrtende eine Auswertung seiner Fahrt mit Hinweisen auf für den Alterungszustand der Komponente abträgliche Fahrzustände übermittelt wird. Die Übermittlung kann beispielsweise unter Verwendung einer Karte bzw. Kartendarstellung erfolgen.

Die Handlungsempfehlung kann beinhalten, dass der Fahrer bei festgestellt wiederholten Strecken rechtzeitig vor der entsprechenden Fahrsituation auf ebendiese bevorstehende Fahrsituation hingewiesen wird. Dabei können dem Fahrer Unterstützungsmaßnahmen und Hinweise angeboten werden. Die festgestellt wiederholten Strecken können beispielsweise der Arbeitsweg oder der Heimweg sein.

Dadurch kann der Fahrer aktiv über sein Fahrverhalten informiert werden. Dem Fahrer kann sein Einfluss auf die Leistungsfähigkeit der AGN in Abhängigkeit seines Fahrverhaltens gespiegelt werden. Durch die aktive Einbindung des Fahrers kann die Leistungsfähigkeit der AGN länger erhalten werden. Durch die aktive Einbindung des Fahrers kann der Alterungsprozess der Komponente verlangsamt werden. Durch die Mitwirkung des Fahrers können die CO2-Emissionen und Schadstoffemissionen während des Fahrbetriebs verringert werden. Durch die Mitwirkung des Fahrers kann der Austausch von Komponenten vermieden werden und Unterhaltskosten reduziert werden. Durch einen an die vorzeitige Alterung der Komponente angepassten Fahrzustand bzw. angepasstes Moment kann der Austausch von Komponenten vermieden oder verringert werden.

Es gibt Ausführungsformen, bei denen der Steuerbefehl eine zur aktuellen Momentanforderung abweichende Momentanforderung zur Unterschreitung des zulässigen Moments ausgibt.

Die abweichende Momentanforderung kann eine Empfehlung sein. Die abweichende Momentanforderung kann ein Eingriff sein. Der Eingriff kann ein automatischer Eingriff sein. Die abweichende Momentanforderung kann ein Eingriff in die Antriebsmaschine sein. In einem Fall, in dem sich abzeichnet, dass die Leistungsfähigkeit der Komponente bei Beibehaltung der aktuellen Momentanforderung nicht mehr über den vorgegebenen Nutzungszeitraum einhaltbar wäre, kann automatisch eine abweichende Momentanforderung gewählt werden. Dem Fahrer kann zugleich eine Handlungsempfehlung angezeigt werden.

Der Steuerbefehl kann die automatische Begrenzung der aktuellen Momentanforderung sein. Der Steuerbefehl kann die automatische Begrenzung eines fahrerseitigen Momentwunsches sein. Die abweichende Momentanforderung kann hin zu einem Moment von null sein, also einem Start- und/oder Abfahrtverbot. Das Abfahrtverbot kann beispielsweise solange aktiv sein, bis eine Light-Off-Temperatur der Komponente erreicht ist.

Dadurch kann verhindert werden, dass das Fahrzeug während der gesamten Nutzungsdauer in einem Zustand betrieben wird, in dem die Leistungsfähigkeit der Komponente nicht mehr gegeben ist.

Es gibt Ausführungsformen, bei denen das Alterungsmodell zur Bestimmung des Alterungszustands eine zum Zeitpunkt der Bestimmung geleistete Laufleistung der Komponente und/oder eine zum Zeitpunkt der Bestimmung verbleibende Laufleistung einbezieht. Das Alterungsmodell kann weitere Parameter einbeziehen. Das Alterungsmodell kann Umgebungsparameter einbeziehen.

Jede Komponente kann eine vorgegebene maximale Laufleistung haben. Die maximale Laufleistung kann sich aus Herstellerangaben ableiten. Die Laufleistung kann beispielsweise über eine Laufleistung des Fahrzeugs ermittelt werden.

Das Alterungsmodell zur Bestimmung des Alterungszustands kann eine zum Zeitpunkt der Bestimmung geleistete Laufleistung der Komponente einbeziehen. Das Alterungsmodell kann eine zum Zeitpunkt der Bestimmung verbleibende Laufleistung einbeziehen. Der Alterungszustand kann aus deren Summe gebildet werden. Der Alterungszustand kann aus deren Verhältnis gebildet werden. Der Alterungszustand kann aus dem Verhältnis zu den jeweils tatsächlich geleisteten bzw. verbleibenden Laufleistungen gebildet werden.

Hierdurch kann festgestellt werden, in wie weit das Fahrverhalten eine verbleibende Restaktivität der Komponente der AGN beeinflusst. Weiterhin kann festgestellt werden, ob mit dem aktuellen Fahrverhalten die konforme Alterungsbedingung der Komponente vor dem Ende der relevanten Nutzungsdauer unterschritten werden könnte.

Mit dem Alterungsmodell kann vorhergesagt werden, in welcher Art und Weise durch das Fahrverhalten beeinflusst, welche AGN Komponente wie beeinflusst wird. Die Beeinflussung kann negativ oder positiv sein. Mit dem Alterungsmodell kann der Alterungszustand vor, während und nach einer Fahrphase prädiktiv bestimmt werden.

Es gibt Ausführungsformen, bei denen zur Ermittlung des zulässigen Moments ein Umgebungsparameter einbezogen wird.

Der Umgebungsparameter kann eine Umgebungstemperatur sein. Der Umgebungsparameter kann ein Umgebungsdruck sein. Der Umgebungsparameter kann eine Luftfeuchtigkeit sein. Der Umgebungsparameter kann eine Partikelbelastung der Umwelt sein. Der Umgebungsparameter kann eine Schadstoffbelastung der Umwelt sein. Der Umgebungsparameter kann den verwendeten Kraftstoff umfassen. Der Umgebungsparameter kann das verwendete Motoröl umfassen. Der Umgebungsparameter kann mehrere Parameter umfassen. Der Umgebungsparameter kann aus Sensordaten ermittelt werden.

Dadurch kann das zulässige Moment den aktuellen Gegebenheiten angepasst werden. Dadurch kann berücksichtigt werden, dass die Umgebungsparameter den Alterungsprozess der Komponente möglicherweise beeinflussen.

Es gibt Ausführungsformen, bei denen die bisherigen Momentanforderungen die Momentanforderungen in einem Betriebszeitraum des Fahrzeugs sind.

Der Betriebszeitraum kann einer bisherigen Laufleistung des Fahrzeugs entsprechen. Innerhalb des Betriebszeitraums können die bisherigen Momentanforderungen gezählt worden sein. Ein Halterwechsel kann einen neuen oder einen weiteren Betriebszeitraum begründen.

Es gibt Ausführungsformen, bei denen mehrere charakteristische Werte ermittelt werden und einer der mehreren charakteristischen Werte zur Ermittlung des zulässigen Moments einbezogen wird.

Jeder der mehreren charakteristischen Werte kann jeweils einem unterschiedlichen Fahrer zugeordnet sein. Jeder charakteristische Wert kann einem eigenen Fahrerprofil zugeordnet werden. Ein Fahrer kann beispielsweise über einen anderen personalisierten Schlüssel, ein Handy oder eine Fahrerabfrage zu Beginn der Fahrt zugeordnet werden.

Jeder Fahrer hat ein individuelles Fahrverhalten. Dadurch kann sich ein unterschiedlicher charakteristischer Wert für jeden Fahrer ergeben. Das zulässige Moment kann bei einem unterschiedlichen charakteristischen Wert für jeden Fahrer unterschiedlich sein. Dadurch kann resultieren, dass bei einem Fahrer mit einem eher sportlichen Fahrstil ein anderer Steuerbefehl auslöst wird als bei einem Fahrer mit einem eher defensiven Fahrstil.

Es gibt Ausführungsformen, bei denen die aktuelle Momentanforderung aus einer Gaspedalstellung und/oder aus Fahrdaten ermittelt wird.

Die aktuelle Momentanforderung kann aus einer Gaspedalstellung ermittelt werden. Die aktuelle Momentanforderung kann aus Fahrdaten ermittelt werden. Die Fahrdaten können Navigationsdaten sein. Beispielsweise kann der Fahrer vor Fahrtantritt Navigationsdaten eingeben. Aus den Navigationsdaten kann eine optimale Fahrtroute ermittelt werden, damit die Komponente der AGN möglichst wenig belastet wird. Weiterhin können aus den Navigationsdaten vorab kritische Streckenabschnitte ermittelt werden, bei denen das zulässige Moment möglicherweise überschritten wird. Auf Grundlage dieser Erkenntnis kann vor Fahrtantritt oder während der Fahrt ein entsprechender Steuerbefehl ausgelöst werden. Der Steuerbefehl kann eine Handlungsempfehlung für den Fahrer sein, wie er das Fahrzeug bewegen muss, damit die Komponente möglichst wenig belastet wird.

In einem Fall, in dem das Fahrzeug ein Hybridfahrzeug ist, kann ein Steuerbefehl ausgelöst werden, wann das Fahrzeug über die Verbrennungskraftmaschine und wann über die elektrische Maschine betrieben werden soll.

In einem anderen Fall, in dem das Fahrzeug autonom betrieben werden soll, kann ein Steuerbefehl ausgelöst werden, der verschiedene Momente für verschiedene Routenabschnitte ausgibt, bei denen das zulässige Moment nicht unterschritten wird.

Es gibt Ausführungsformen, bei denen eine Regeneration der Komponente durchgeführt wird, wenn die aktuelle Momentanforderung ein Kriterium für die Regeneration erfüllt.

Die Regeneration kann ein Regenerationszyklus sein. Durch die Regeneration kann die Lebensdauer der Komponente verlängert werden. Das Kriterium kann erfüllt sein, wenn das Fahrzeug über eine Mindestdauer bzw. Mindestdistanz bewegt wurden muss. Beispielsweise kann über die Fahrdaten ermittelt werden, ob bei einer vorausliegenden Fahrt das Kriterium für die Regeneration für die Komponente erfüllt wird. Ist das Kriterium erfüllt, wird die Regeneration durchgeführt. Ist das Kriterium nicht erfüllt, wird keine Regeneration durchgeführt.

Die Regeneration kann den Alterungsprozess der Komponente beeinflussen. Die Regeneration kann die Leistungsfähigkeit der Komponente beeinflussen. Die Regeneration kann den Alterungszustand der Komponente beeinflussen.

Ein zweiter Aspekt der Erfindung betrifft ein Computerprogramm, welches direkt in einen Speicher eines Steuergerätes ladbar ist, mit Programm-Mitteln, um die Schritte des erfindungsgemäßen Verfahrens auszuführen, wenn das Programm in dem Steuergerät ausgeführt wird. Das Computerprogramm, umfassend Befehle, die bei der Ausführung des Programms durch einen Computer diesen veranlassen können, das erfindungsgemäße Verfahren auszuführen,

Ein dritter Aspekt der Erfindung betriff ein Steuergerät, das eingerichtet ist, das erfindungsgemäße Verfahren auszuführen.

Ein vierter Aspekt der Erfindung betrifft eine Antriebsmaschine. Die Antriebsmaschine kann über das erfindungsgemäße Steuergerät gesteuert werden. Die Antriebsmaschine ist eingerichtet und ausgebildet, das erfindungsgemäße Verfahren auszuführen.

Die Antriebsmaschine kann eine Verbrennungskraftmaschine mit einer Abgasnachbehandlung umfassen. Die Verbrennungskraftmaschine kann ein Ottomotor sein. Die Verbrennungskraftmaschine kann ein Dieselmotor sein. Die Antriebsmaschine kann ein Hybridantrieb umfassen. Der Hybridantrieb kann die Verbrennungskraftmaschine und eine elektrische Maschine umfassen. Die Antriebsmaschine kann einen Brennstoffzellenantrieb mit einer entsprechenden Abgasnachbehandlungsanlage umfassen.

Ein fünfter Aspekt der Erfindung ist ein Kraftfahrzeug mit dem erfindungsgemäßen Steuergerät. Das Kraftfahrzeug ist eingerichtet und ausgebildet, das erfindungsgemäße Verfahren auszuführen.

Das Fahrzeug kann ein Kraftfahrzeug sein. Das Fahrzeug kann ein Wasserfahrzeug sein. Das Fahrzeug kann ein schienengebundenes Fahrzeug sein.

Das erfindungsgemäße Verfahren kann auch in einer anderen beliebigen Anlage verwendet werden, die über eine Verbrennungsanlage zur Bereitstellung von Leistung und/oder Wärme verfügt und über eine Abgasnachbehandlungsanlage verfügt.

Ausführungsbeispiele der Erfindung werden nun beispielhaft und unter Bezugnahme auf die beigefügte Zeichnung beschrieben. Gleiche oder ähnliche Teile werden mit einheitlichen Bezugszeichen bezeichnet. Dabei zeigt:
Fig. 1 schematisch eine Verbrennungskraftmaschine mit einer Komponente einer Abgasnachbehandlung sowie ein Steuergerät;
Fig. 2 schematisch einen Ablauf zum Auslösen eines Steuerbefehls;
Fig. 3 schematisch ein Ablaufdiagramm eines Verfahrens gemäß einer Ausführungsform;
Fig. 4a schematisch ein beispielhaftes Ablaufdiagramm für die Ermittlung der Alterungsbelastung;
Fig. 4b schematisch ein beispielhaftes Ablaufdiagramm eines Zählers für die Ermittlung der Alterungsbelastung; und
Fig. 5 schematisch ein Kraftfahrzeug mit einem Steuergerät gemäß einer Ausführungsform.

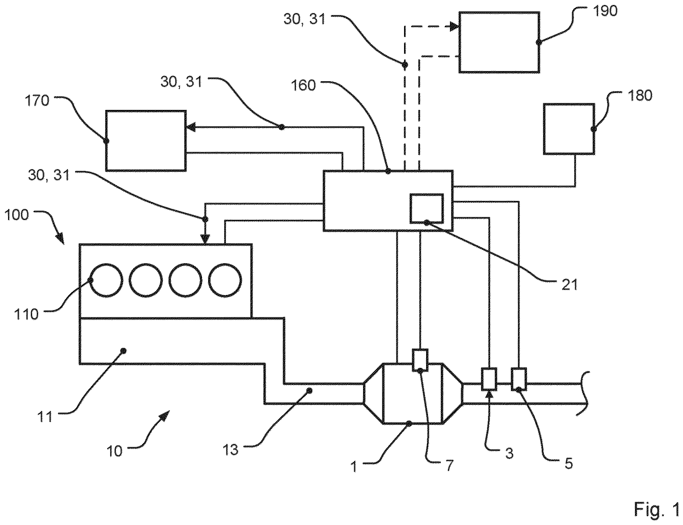

Fig. 1 zeigt eine schematische Ansicht einer Antriebsmaschine 100 mit einer Verbrennungskraftmaschine 110 und einem Steuergerät 160. Die Verbrennungskraftmaschine 110 ist mit ihrem Auslass 11 mit einer Abgasanlage 10 verbunden, welche einen Abgaskanal 13 umfasst. Im Abgaskanal ist stromabwärts eine Komponente 1 der Abgasnachbehandlung angeordnet.

In der Abgasanlage 10 ist stromabwärts nach der Komponente 1 ein Temperatursensor 5 und eine Massenstromsensoranordnung 3 angeordnet. Der Temperatursensor 5 und die Massenstromsensoranordnung 3 dienen zur Ermittlung einer aktuellen Abgastemperatur und eines aktuellen Abgasmassenstroms. Die Massenstromsensoranordnung 3 kann zwei Sensoren umfassen. Mit den Sensoren kann ein Durchfluss und/oder eine Dichte ermittelt werden. An der Komponente 1 ist ein weiterer Temperatursensor 7 zur Ermittlung einer Temperatur an der Komponente 1 angeordnet.

Ferner können stromaufwärts vor der Komponente 1 ebenfalls Temperatursensoren und Massenstromsensoren zur Überwachung angeordnet sein (nicht dargestellt).

In Fig. 1 ist weiterhin das Steuergerät 160 dargestellt. Das Steuergerät 160 beinhaltet unter anderem das Alterungsmodell 21. Das Steuergerät 160 ist mit der Komponente 1, der Antriebsmaschine 100, einer Anzeigeeinheit 170, einer Übermittlungseinheit 190 und einer Datenbank 180 verbunden. Weiterhin ist das Steuergerät 160 mit den Temperatursensoren 5 und 7 sowie der Massenstromsensoranordnung 3 verbunden. Die Anzeigeeinheit 170 ist im Wahrnehmungsbereich des Fahrers angeordnet.

Über die Datenbank 180 kann beispielsweise auf verschiedene charakteristische Werte 23 oder auf andere Parameter zugegriffen werden.

In Fig. 1 ist ein Zustand dargestellt, bei dem ein Signal 30 ausgegeben wird und ein Steuerbefehl 31 ausgelöst wird. In Fig. 1 wird exemplarisch das Signal 30 mit Steuerbefehl 31 an die Antriebsmaschine 100, die Anzeigeeinheit 170 sowie die Übermittlungseinheit 190 ausgegeben und ausgelöst. Das Signal 30 mit Steuerbefehl 31 kann auch lediglich an die Antriebsmaschine 100, die Anzeigeeinheit 170 oder die Übermittlungseinheit 190 ausgegeben und ausgelöst werden.

Die Übermittlungseinheit 190 ist über eine gestrichelte Linie mit dem Steuergerät 160 verbunden, da die Ausgabe innerhalb oder außerhalb des Fahrzeugs erfolgen kann. Die Übertragung kann kabellos erfolgen.

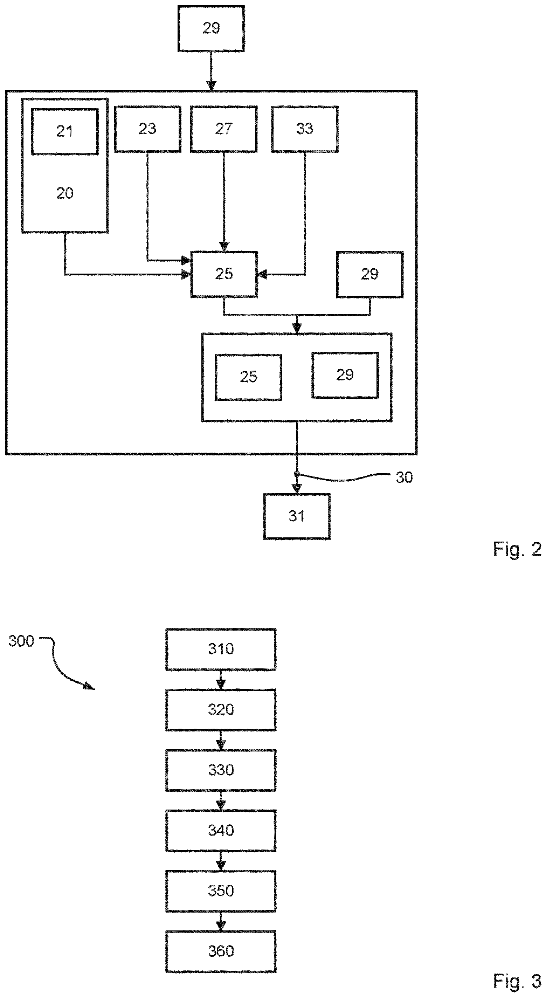

In Fig. 2 ist schematisch ein Ablauf zum Auslösen des Steuerbefehls 31 dargestellt. Als Eingangsgröße geht eine aktuelle Momentanforderung 29 ein. Das zulässige Moment 25 wird unter Einbezug eines Alterungszustands 20 der Komponente 1 mit einem Alterungsmodell 21, eines charakteristischen Werts 23, eines Grenzwerts 27 einer konformen Alterungsbedingung der Komponente 1 und eines Umgebungsparameters 33 ermittelt. Anschließend wird die aktuelle Momentanforderung 29 mit dem zulässigen Moment 25 verglichen. In Fig. 2 überschreitet die aktuelle Momentanforderung 29 das zulässige Moment 25. In dieser Folge wird ein Signal 30 ausgegeben, das einen Steuerbefehl 31 auslöst.

Fig. 3 zeigt ein Ablaufdiagramm eines Verfahrens 300 zur Beeinflussung eines Alterungsprozesses der Komponente 1 der Abgasnachbehandlung gemäß einer Ausführungsform.

In Block 310 wird der Alterungszustand 20 an der Komponente 1 mit dem Alterungsmodell 21 prädiktiv bestimmt.

In Block 320 wird der charakteristische Wert 23 aus Betriebsparametern aus bisherigen Momentanforderungen ermittelt.

In Block 330 wird unter Berücksichtigung des Alterungszustands 20 an der Komponente 1 und des charakteristischen Werts 23 das zulässige Moment 25 ermittelt. Das zulässige Moment 25 ist ein Moment, bei dem der Grenzwert 27 einer konformen Alterungsbedingung der Komponente 1 unterschritten wird.

In Block 340 wird die aktuelle Momentanforderung 29 mit dem zulässigen Moment 25 verglichen.

In Block 350 wird das Signal 30 ausgegeben, wenn die aktuelle Momentanforderung 29 das zulässige Moment 25 überschreitet.

In Block 360 wird der Steuerbefehl 31 ausgelöst. Die Auswahl des Steuerbefehls 31 erfolgt anhängig von einer Abweichung der Überschreitung der aktuellen Momentanforderung 29 zu dem zulässigen Moment 25.

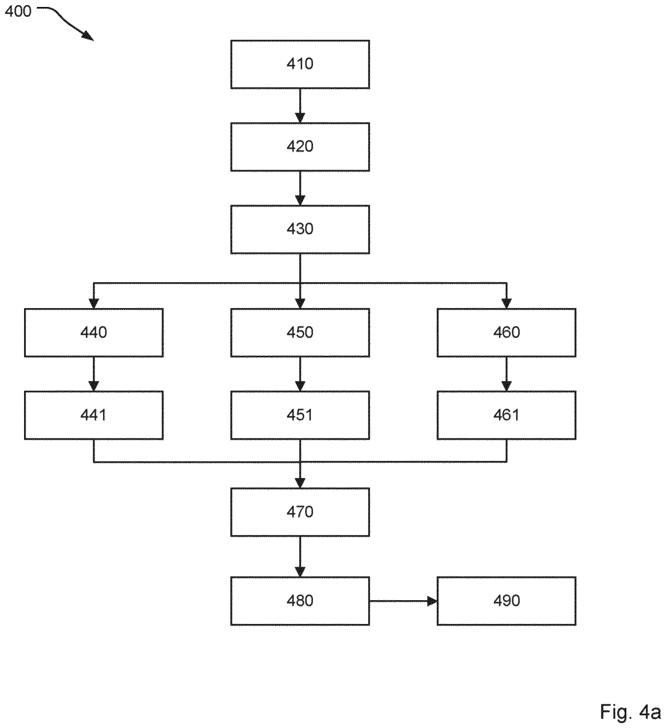

Fig. 4a zeigt ein beispielhaftes Ablaufdiagramm 500 von einer Momentanforderung als Eingangsgröße bis zu der Ausgabe eines Steuerbefehls 31.

Block 410 ist eine von einem Fahrer kommende Momentanforderung als Eingangsgröße. Die Momentanforderung kann der aktuellen Momentanforderung 29 entsprechen.

Block 420 umfasst das Steuergerät 160. Das Steuergerät 160 ist eine ECU. Die Momentanforderung wird von Block 410 auf Block 420 übermittelt.

In Block 430 wird ein Moment an der Antriebsmaschine 100 bereitgestellt. Das Steuergerät steht das Moment an der Antriebsmaschine 100 bereit. Das Moment kann an der Verbrennungskraftmaschine 110 bereitgestellt werden.

Aus dem Block 430 werden wiederum drei Blöcke 440, 450 und 460 in drei parallelen Pfaden ausgegeben.

Im ersten Pfad erfolgt in Block 440 eine Messung der Abgastemperatur und eine Messung des Abgasmassenstroms. Die Messung der Abgastemperatur kann über den Temperatursensor 5 erfolgen. Die Messung des Abgasmassenstroms kann über den Massenstromsensoranordnung 3 erfolgen.

Im ersten Pfad erfolgt anschließend in Block 441 eine lastpunktabhängige Auswertung der Alterungsbelastung. Die Auswertung erfolgt auf Grundlage der Messergebnisse aus Block 440.

Im zweiten Pfad erfolgt in Block 450 eine prädiktive Bestimmung der Abgastemperatur und eine prädiktive Bestimmung des Abgasmassenstroms. Die prädiktive Bestimmung kann unter Einbezug des Alterungsmodells 21 erfolgen.

Im zweiten Pfad erfolgt anschließend in Block 451 eine lastpunktabhängige Auswertung der Alterungsbelastung. Die Auswertung erfolgt auf Grundlage der prädiktiv bestimmten Werte aus Block 440.

Im dritten Pfad werden in Block 460 die Momentanforderungen gezählt. Dies erfolgt über einen Zähler. Das Zählen der Momentanforderungen kann lastpunktabhängig erfolgen. Das Zählen der Momentanforderungen trägt zum Ermitteln des charakteristischen Werts 23 bei.

Im dritten Pfad werden anschließend in Block 461 die Momentanforderungen mit einem Schwellwert verglichen.

Die drei Pfade laufen in Block 470 wieder zu einem einzelnen Pfad zusammen. Im Block 470 werden die verschiedenen Auswertungen miteinander verglichen.

Anschließend erfolgt in Block 480 ein Vergleich mit Vorgabewerten. Die Vorgabewerte können Grenzwerte sein.

Abschließend wird in Block 490 ein Signal 30 ausgegeben. Das Signal 30 löst einen Steuerbefehl 31 aus. Der Steuerbefehl ist ein Hinweis an den Fahrer bzw. eine Einschränkung der Momentanforderung.

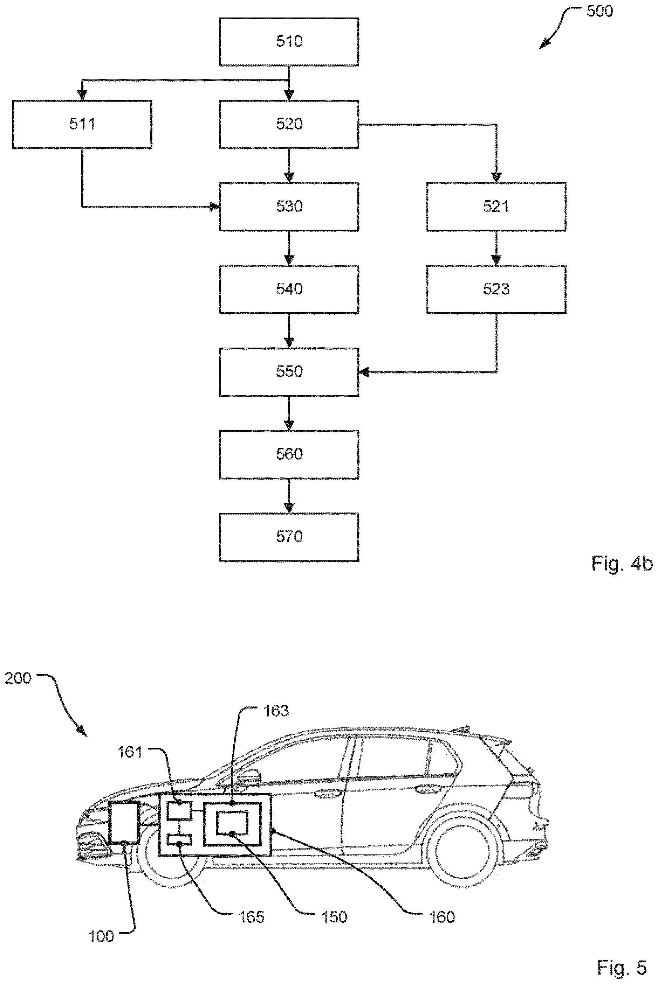

Fig. 4b zeigt ein beispielhaftes Ablaufdiagramm 500 eines Zählers. Der Zähler in Fig. 4b kann in dem Ablaufdiagramm 400 aus Fig. 4a implementiert sein.

In Block 510 ist eine Momentanforderung als Eingangsgröße.

Die Momentanforderung aus Block 510 geht in Block 520 und parallel in Block 511 ein.

In Block 520 wird eine Fahrsituation ermittelt. Die Fahrsituation wird aus der Momentanforderung ermittelt.

Im parallel angeordneten Block 511 wird eine Situation einer Abgasnachbehandlung ermittelt.

In Block 530 geht die ermittelte Fahrsituation aus Block 520 und die ermittelte Situation der Abgasnachbehandlung aus Block 511 ein. In Block 530 wird ein zulässiges Moment aus Sicht einer Alterungsbelastung ermittelt.

Anschließend erfolgt in Block 540 ein Vergleich des zulässigen Moments aus Sicht der Alterungsbelastung. Das zulässige Moment kann mit dem angeforderten Moment verglichen werden.

Die ermittelte Fahrsituation aus Block 520 geht neben Block 530 in einen parallelen Pfad in Block 521 ein. In Block 521 wird eine Zeitüberschreitung bestimmt. Die Zeitüberschreitung kann eine Zeit sein, bei der die Momentanforderung zu hoch ist.

Anschließend werden in Block 523 die Überschreitungen mit der Zeit gewichtet.

Die gewichteten Zeitüberschreitungen aus Block 523 und der Vergleich des zulässigen Moments aus Sicht der Alterungsbelastung aus Block 540 gehen anschließend in Block 550 ein. In Block 550 werden die Anforderungssituationen gezählt, die das zulässige Moment überschreiten.

Anschließend werden in Block 560 die Überschreitungen ausgewertet. Die Auswertung erfolgt beispielsweise nach der Fahrsituation oder der Momentanforderung.

Abschließend wird in Block 570 ein Steuerbefehl 31 ausgelöst. Der Steuerbefehl 31 kann eine Handlung mit einem Hinweis an den Fahrer sein.

Fig. 5 zeigt schließlich schematisch ein beispielhaftes Steuergerät 160, das eingerichtet ist, das oben beschriebenen Verfahren auszuführen. Das Steuergerät 160 ist in einem Kraftfahrzeug 200 angeordnet und kann die Antriebsmaschine 100 mit der Verbrennungskraftmaschine 110 steuern und/oder regeln. Das Steuergerät 160 umfasst einen Prozessor 161, einen Speicher (elektronisches Speichermedium) 163 und eine Schnittstelle 165. Ferner ist in dem Speicher 163 auch ein Computerprogramm (Software) 150 hinterlegt, das dazu ausgelegt ist, mit Programm-Mitteln das oben beschriebene Verfahren auszuführen. Der Prozessor 161 ist dazu ausgelegt, Programminstruktionen des Computerprogramms 150 auszuführen. Die Schnittstelle 165 ist ferner dazu ausgelegt, Daten zu empfangen und auszusenden. Es kann sich beispielsweise um eine Schnittstelle zu einem CAN-Bus des Kraftfahrzeugs 200 handeln, über den das Steuergerät 160 Signale empfängt und Steuerbefehle aussendet.

### Bezugszeichenliste

- 1: Komponente der AGN
- 3: Massenstromsensoranordnung
- 5: Temperatursensor
- 7: Temperatursensor
- 10: Abgasanlage
- 11: Auslass
- 13: Abgaskanal
- 20: Alterungszustand der Komponente
- 21: Alterungsmodell
- 23: Charakteristischer Wert
- 25: Zulässiges Moment
- 27: Grenzwert einer konformen Alterungsbedingung der Komponente
- 29: Aktuelle Momentanforderung
- 30: Signal
- 31: Steuerbefehl
- 33: Umgebungsparameter
- 35: Regenerationskriterium
- 100: Antriebsmaschine
- 110: Verbrennungskraftmaschine
- 150: Computerprogramm
- 160: Motorsteuerung/Steuergerät
- 163: Speicher
- 170: Anzeigeeinheit
- 180: Datenbank
- 190: Übermittlungseinheit
- 200: Fahrzeug
- 300: Verfahren
- 310: Prädiktive Bestimmung eines Alterungszustands
- 320: Ermitteln eines charakteristischen Wertes
- 330: Ermitteln eines zulässigen Moments
- 340: Vergleich aktuelle Momentanforderung mit zulässigem Moment
- 350: Ausgabe eines Signals
- 360: Auslösen eines Steuerbefehls
- 400: Verfahren
- 410: Momentanforderung Fahrer
- 420: Steuergerät/ECU
- 430: Bereitstellen Moment Antriebsmaschine
- 440: Messen Abgastemperatur/Abgasmassenstrom
- 441: Lastpunktabhängiges auswerten der Alterungsbelastung (Messung)
- 450: Prädiktives Bestimmen von Abgastemperatur/Abgasmassenstrom
- 451: Lastpunktabhängiges auswerten der Alterungsbelastung (Prädiktiv)
- 460: Zähler Momentanforderungen
- 461: Vergleich mit Schwellenwert
- 470: Vergleich der Auswertungen
- 480: Vergleich mit Vorgabewerten
- 490: Ausgabe Signal und Auslösen Steuerbefehl
- 500: Zähler
- 510: Momentanforderung
- 511: Ermitteln der Situation der Abgasnachbehandlung
- 520: Ermitteln der Fahrsituation
- 521: Bestimmen der Zeit der Überschreitung
- 523: Gewichten der Überschreitungen mit der Zeit
- 530: Ermitteln zulässiges Moment aus Sicht der Alterungsbelastung
- 540: Vergleich zulässiges Moment aus Sicht der Alterungsbelastung
- 550: Zählen der Anforderungssituationen, die zulässiges Moment überschreiten
- 560: Auswerten der Überschreitungen
- 570: Auslösen Steuerbefehl/Handlung

## Patentansprüche

1. Verfahren zur Beeinflussung eines Alterungsprozesses einer Komponente (1) einer Abgasnachbehandlung für ein Fahrzeug (200), umfassend:
- Prädiktive Bestimmung eines Alterungszustands (20) an der Komponente (1) mit einem Alterungsmodell (21);
- Ermitteln eines charakteristischen Werts (23) aus Betriebsparametern aus bisherigen Momentanforderungen;
- Ermitteln eines zulässigen Moments (25) unter Berücksichtigung des Alterungszustands (20) an der Komponente (1) und des charakteristischen Werts (23), bei dem ein Grenzwert (27) einer konformen Alterungsbedingung der Komponente (1) unterschritten wird;
- Vergleich einer aktuellen Momentanforderung (29) mit dem zulässigen Moment (25);
- Ausgabe eines Signals (30), wenn die aktuelle Momentanforderung (29) das zulässige Moment (25) überschreitet; und
- Auslösen eines Steuerbefehls (31) einer Motorsteuerung (160), wobei der Steuerbefehl (31) in Abweichung der Überschreitung der aktuellen Momentanforderung (29) zu dem zulässigen Moment (25) ausgewählt wird.

2. Verfahren nach Anspruch 1, wobei der Steuerbefehl (31) entsprechend der Abweichung der Überschreitung unterschiedlich ausgewählt wird.

3. Verfahren nach Anspruch 1 oder 2, wobei der Steuerbefehl (31) eine Handlungsempfehlung zum Einhalten des zulässigen Moments (25) ist.

4. Verfahren nach einem der vorhergehenden Ansprüche, wobei der Steuerbefehl (31) eine zur aktuellen Momentanforderung (29) abweichende Momentanforderung zur Unterschreitung des zulässigen Moments (25) ausgibt.

5. Verfahren nach einem der vorhergehenden Ansprüche, wobei das Alterungsmodell (21) zur Bestimmung des Alterungszustands (20) eine zum Zeitpunkt der Bestimmung geleistete Laufleistung der Komponente (1) und/oder eine zum Zeitpunkt der Bestimmung verbleibende Laufleistung einbezieht.

6. Verfahren nach einem der vorhergehenden Ansprüche, wobei zur Ermittlung des zulässigen Moments (25) ein Umgebungsparameter (33) einbezogen wird.

7. Verfahren nach einem der vorhergehenden Ansprüche, wobei die bisherigen Momentanforderungen die Momentanforderungen in einem Betriebszeitraum des Fahrzeugs (200) sind.

8. Verfahren nach einem der vorhergehenden Ansprüche, wobei mehrere charakteristische Werte (23) ermittelt werden und einer der mehreren charakteristischen Werte (23) zur Ermittlung des zulässigen Moments (25) einbezogen wird.

9. Verfahren nach einem der vorhergehenden Ansprüche, wobei die aktuelle Momentanforderung (29) aus einer Gaspedalstellung und/oder aus Fahrdaten ermittelt wird.

10. Verfahren nach einem der vorhergehenden Ansprüche, wobei eine Regeneration der Komponente (1) durchgeführt wird, wenn die aktuelle Momentanforderung (29) ein Kriterium (35) für die Regeneration erfüllt.

11. Computerprogramm (150), welches direkt in einen Speicher (163) eines Steuergerätes (160) ladbar ist, mit Programm-Mitteln, um die Schritte des Verfahrens nach einem der Ansprüche 1 bis 10 auszuführen, wenn das Programm (150) in dem Steuergerät (160) ausgeführt wird.

12. Steuergerät (160), das eingerichtet ist, ein Verfahren nach einem der Ansprüche 1 bis 10 auszuführen.

13. Antriebsmaschine (100) mit einem Steuergerät (160) nach Anspruch 12, wobei die Antriebsmaschine (100) eingerichtet und ausgebildet ist, ein Verfahren nach einem der Ansprüche 1 bis 10 auszuführen.

14. Kraftfahrzeug (200) mit einer Antriebsmaschine (100) nach Anspruch 13, wobei das Kraftfahrzeug (200) eingerichtet und ausgebildet ist, ein Verfahren nach einem der Ansprüche 1 bis 10 auszuführen.
